# EUROPÄISCHE PATENTSCHRIFT

(11) **EP 3 724 008 B1**
(45) Veröffentlichungstag und Bekanntmachung des Hinweises auf die Patenterteilung: **22.02.2023**
(21) Anmeldenummer: 18782345.5
(22) Anmeldetag: 25.09.2018
(51) Int. Cl.: B60C 11/16

(54) **SPIKE UND FAHRZEUGLUFTREIFEN MIT IM LAUFSTREIFEN VERANKERTEN SPIKES**
SPIKE AND PNEUMATIC TIRE WITH A TREAD HAVING SUCH A SPIKE
CRAMPON ET PNEUMATIQUE EQUIPE AVEC UNE BANDE DE ROULEMENT AVEC CEUX CRAMPONS

(30) Priorität: 12.12.2017 DE 102017222509
(43) Veröffentlichungstag der Anmeldung: 21.10.2020
(73) Patentinhaber: Continental Reifen Deutschland GmbH, 30165 Hannover (DE)
(72) Erfinder: SCHLITTENHARD, Jan, 30419 Hannover (DE); KÖTTER, Maik, 30419 Hannover (DE); SPECHTMEYER, Torben, 30419 Hannover (DE)
(74) Vertreter: Continental Corporation
(86) Internationale Anmeldenummer: PCT/EP2018/075865
(87) Internationale Veröffentlichungsnummer: WO 2019/115038

(56) Entgegenhaltungen:
- EP-A1- 2 165 859
- WO-A1-2014/102936
- DE-A1-102009 044 547

## Beschreibung

Die Erfindung betrifft einen Spike zum Verankern im Laufstreifen eines Fahrzeugreifens mit einem Spikekörper aus einem Oberflansch und einem Fußflansch und mit einem im Spikekörper verankerten, den Oberflansch mit einem Pinabschnitt überragenden Spikepin, wobei an der ansonsten ebenen Oberseite des Oberflansches zwei Ausnehmungen ausgebildet sind, welche jeweils bezüglich des Spikepins einander gegenüberliegen, vom Spikepin ausgehend bis zum Rand des Oberflansches verlaufen und am Rand des Oberflansches offen enden. Die Erfindung betrifft ferner einen Fahrzeugluftreifen mit einem Laufstreifen mit im Laufstreifen in Spikelöchern verankerten Spikes mit einem Spikekörper aus einem Oberflansch und einem Fußflansch sowie mit einem im Spikekörper verankerten den Oberflansch überragenden Spikepin, wobei der Oberflansch mit zwei Ausnehmungen versehen ist, welche jeweils bezüglich des Spikepins einander gegenüberliegen, vom Spikepin ausgehend bis zum Rand des Oberflansches verlaufen und am Rand des Oberflansches offen enden.

Ein Spike der eingangs genannten Art ist beispielsweise aus der gattungsbildenden WO 2014/102936 A1 bekannt. Der Spike weist einen in Draufsicht kreisrund ausgeführten Spikepin sowie einen aus einem Fußflansch und einem Oberflansch bestehenden Spikekörper auf. Bei einer der offenbarten Ausgestaltungen von Spikes sind an der Oberseite des Oberflansches vom Spikepin ausgehend zwei Ausnehmungen ausgebildet, welche schmale und gerade verlaufende Rillen in der Oberseite des Oberflansches sind. Die an der Oberseite des Oberflansches vorliegenden Kanten der Ausnehmungen sollen dazu beitragen, die Griffeigenschaften des Spikes auf Eis zu verbessern.

Üblicherweise beruht die Wirkungsweise von bespikten Reifen auf mehreren Effekten. Insbesondere dringen Spikes in auf der Fahrbahn befindliches Eis ein und verzahnen sich in diesem mechanisch. Bei Brems- und Traktionsvorgängen treten darüber hinaus Relativbewegungen (Schlupf) zwischen dem Laufstreifen und der eisbedeckten Fahrbahn auf, wobei die Spikes durch das Eis gezogen werden und Rinnen in die Eisoberfläche fräsen. Die dabei anfallenden Eisspäne sammeln sich häufig um den jeweiligen Spike an, wodurch sowohl die Eisgriffwirkung des Spikes als auch die Eisgriffwirkung des den Spike umgebenden Gummimaterials im Laufstreifen leidet. Um diesen unerwünschten Auswirkungen der anfallenden Eisspäne entgegen zu wirken, ist es bekannt, zur Aufnahme der Eisspäne im Laufstreifen in unmittelbarer Nähe zu den Spikes seichte, langgestreckte Vertiefungen als Ableitkanäle bzw. Reservoire zur Aufnahme der Eisspäne vorzusehen. Derartige Ableitkanäle oder Vertiefungen sind in unterschiedlichen Ausgestaltungen bekannt. Aus der DE 10 2009 044 547 A1 ist beispielsweise ein Fahrzeugluftreifen mit einem Laufstreifen mit Profilelementen mit Spikes bekannt, wobei bei jedem Spike im Profilelement eine den Spike ringförmig umlaufende Vertiefung ausgebildet ist. Die EP 2 165 859 A1 offenbart einen weiteren Fahrzugluftreifen mit einem Laufstreifen mit Profilelementen mit Spikes, wobei bei jedem Spike eine Vielzahl von Vertiefungen im Profilelement ausgebildet ist und diese Vertiefungen den Spike insgesamt ringförmig umgeben. Weitere solcher Ableitkanäle oder Vertiefungen sind beispielsweise aus der WO 2009/1470147 A1, der WO 2009/147046 A1 und der DE 10 2015 221 118 A1 bekannt.

Der Erfindung liegt die Aufgabe zugrunde, Spikes und einen Fahrzeugluftreifen der eingangs genannten Art derart auszuführen, dass der Abtransport und/oder eine Aufnahme sich bildender Eisspäne unterstützt wird, um ein für die Eisgriffwirkung der Spikes unerwünschtes Einklemmen und Anlagern von Eisspänen zwischen der Spikeoberfläche und dem eisigen Untergrund zumindest weitgehend zu vermeiden.

Gelöst wird die gestellte Aufgabe erfindungsgemäß mit einem Spike, bei welchem zumindest der den Oberflansch überragende Pinabschnitt des Spikepins in Draufsicht langgestreckt ausgeführt ist und bei welchem die beiden Ausnehmungen unmittelbar an die in Draufsicht breiteren Seiten des Spikepins anschließen.

Die gestellte Aufgabe wird erfindungsgemäß mit einem Fahrzeugluftreifen gelöst, bei welchem im Laufstreifen in Verlängerung der Ausnehmungen jeweils eine langgestreckte Vertiefung ausgebildet ist.

Die gemäß der Erfindung vorgesehenen Ausnehmungen an der Oberflanschoberseite unterstützen einerseits einen Abtransport der sich bildenden Eisspäne und sind andererseits auch Aufnahmestellen für die sich bildenden Eisspäne, sodass ein unerwünschte Anlagern von Eisspänen an der sonstigen äußeren Spikeoberfläche wirkungsvoll verhindert wird.

Durch die einander gegenüberliegende Anordnung der Ausnehmungen verbleiben seitlich der Ausnehmungen Oberflächenbereiche am Oberflansch, die für eine definierte, eindeutige Ausrichtung der Spikes in der Spikesetzpistole sorgen können. Darüber hinaus tragen die Ausnehmungen zu einem geringeren Spikegewicht und damit zu einem geringeren Straßenverschleiß bei und bewirken durch Materialeinsparung geringere Stückkosten. Die Ausrichtung der Orientierung von Vertiefungen im Laufstreifen an die Orientierung der Ausnehmungen am Spike ist besonders vorteilhaft, da dadurch Eisspäne besonders effektiv in die Vertiefungen abtransportiert werden können.

Bei einer bevorzugten Ausführungsform ist der Fußflansch des Spikekörpers langgestreckt gestaltet, insbesondere oval oder oval ähnlich, und weist zumindest eine, in der längeren Erstreckung des Fußflansches verlaufende Symmetrieebene auf, wobei der den Oberflansch überragende Pinabschnitt des Spikepins mit seiner längeren Erstreckung im rechten Winkel zu der in der längeren Erstreckung des Fußflansches vorliegenden Symmetrieebene verläuft. Dadurch wird bei den bevorzugten Einbaupositionen des Spikes im Laufstreifens eines Fahrzeugluftreifens mit der längeren Erstreckung des Fußflansches in oder im Wesentlichen in Umfangsrichtung einerseits für eine besonders effektive Wirkung des Spikepins und andererseits für eine besonders effektive Aufnahme der vom Spikepin verursachten Eisspäne in die Ausnehmungen sichergestellt.

Besonders vorteilhafte Ausführungsvarianten der Ausnehmungen sorgen dafür, dass die Eisspäne besonders effektiv und in einem optimalen Ausmaß in die Ausnehmungen aufgenommen werden können. Bei einer dieser Ausgestaltungen weist zumindest eine der Ausnehmungen spikepinseitig ihre kleinste Breite auf, welche geringer ist als die Länge des den Oberflansch überragenden Pinabschnittes des Spikepins entlang seiner längeren Erstreckung. Bei einer weiteren Ausführungsform weist zumindest eine der Ausnehmungen spikepinseitig eine Breite auf, die um bis zu 25 % von der Länge des den Oberflansch überragenden Pinabschnittes des Spikepins entlang seiner längeren Erstreckung abweicht. Die Breite der Ausnehmungen wird daher vorteilhafter Weise weitgehend an die längere Erstreckung des den Oberflansch überragenden Pinabschnittes des Spikepins angepasst.

Bevorzugter Weise weist ferner zumindest eine Ausnehmung eine konstante Breite oder eine in Richtung ihres offenen Endes größer werdende Breite auf, wobei im letzteren Fall die Breite der Ausnehmung spikepinseitig mindestens 1,4 mm beträgt. Auch diese Maßnahmen sind für ein optimales Aufnahmevermögen der Ausnehmungen für Eisspäne von Vorteil.

Weitere bevorzugte Ausgestaltungen der Ausnehmungen unterstützen das Aufnahmevermögen der Ausnehmungen für Eisspäne. So kann beispielsweise zumindest eine der Ausnehmungen einen parallel zur Oberseite des Oberflansches verlaufenden Boden aufweisen, alternativ kann zumindest eine der Ausnehmungen einen Boden aufweisen, welcher gegenüber der Oberseite des Oberflansches in Richtung zum offenen Ende der Ausnehmung abfällt, wobei bei dieser Ausführungsvariante auch vorgesehen sein kann, dass die Ausnehmung an ihrem spikepinseitigen Ende keine Tiefe aufweist. Bevorzugter Weise weisen dabei die Ausnehmungen eine Tiefe bzw. eine größte Tiefe von 0,5 mm bis 2,0 mm auf.

Bei bestimmten Orientierungen bzw. Anordnungen der Spikes, insbesondere mit ihrer längeren Erstreckung in Umfangsrichtung des Laufstreifens, ist es bevorzugt, wenn die eine Ausnehmung eine konstante Tiefe und die andere Ausnehmung eine in Richtung zum offenen Ende der Ausnehmung größer werdende Tiefe besitzt oder wenn zusätzlich oder alternativ die eine Ausnehmung eine konstante Breite und die andere Ausnehmung eine in Richtung ihres offenen Endes größer werdende Breite aufweist.

Bei einem Fahrzeugluftreifen, welcher im Laufstreifen in Verlängerung der Ausnehmungen jeweils eine langgestreckte Vertiefung aufweist, ist es bevorzugt, wenn die Breite der Vertiefungen an ihren spikelochseitigen Enden zumindest weitgehend an die Breite der Ausnehmungen an deren offenen Enden am Rand des Oberflansches der Spike angepasst ist bzw. dieser Breite entspricht. Diese Ausgestaltung unterstützt einen optimalen Abtransport der Eisspäne aus den Ausnehmungen an der Oberseite der Spikes in die Vertiefungen im Laufstreifen. Eine weitere, diesen Effekt begünstigende Maßnahme besteht darin, dass die Tiefe der Vertiefungen an ihren spikelochseitigen Enden zumindest weitgehend an das Niveau des Bodens der jeweiligen Ausnehmung an deren offenem Ende am Rand des Oberflansches der Spikes angepasst ist bzw. der Tiefe der jeweiligen Ausnehmung an dieser Stelle entspricht.

Weitere Merkmale, Vorteile und Einzelheiten der Erfindung werden nun anhand der Zeichnung, die Ausführungsbeispiele darstellt, näher beschrieben. Dabei zeigen
Fig. 1 eine Schrägansicht einer Ausführungsvariante eines Spikes,
Fig. 2 eine Seitenansicht des Spikes aus Fig. 1 entlang seiner größeren Erstreckung,
Fig. 3 eine Draufsicht auf den Spike aus Fig. 1,
Fig. 4 eine Schrägansicht einer weiteren Ausführungsvariante eines Spikes,
Fig. 5 eine Seitenansicht des Spikes aus Fig. 4 entlang seiner größeren Erstreckung,
Fig. 6 eine Draufsicht auf den Spike gemäß Fig. 4,
Fig. 7 eine Schrägansicht einer weiteren Ausführungsvariante eines Spikes,
Fig. 8 eine Seitenansicht des Spikes aus Fig. 7 entlang seiner größeren Erstreckung,
Fig. 9 eine Draufsicht auf den Spike gemäß Fig. 7,
Fig. 10 eine Draufsicht auf einen lokalen Ausschnitt eines Laufstreifens eines Fahrzeugluftreifens mit einem eingesetzten, gemäß Fig. 7 bis 9 ausgeführten Spike und
Fig. 11 eine Schnittdarstellung entlang der Linie XI-XI der Fig. 10.

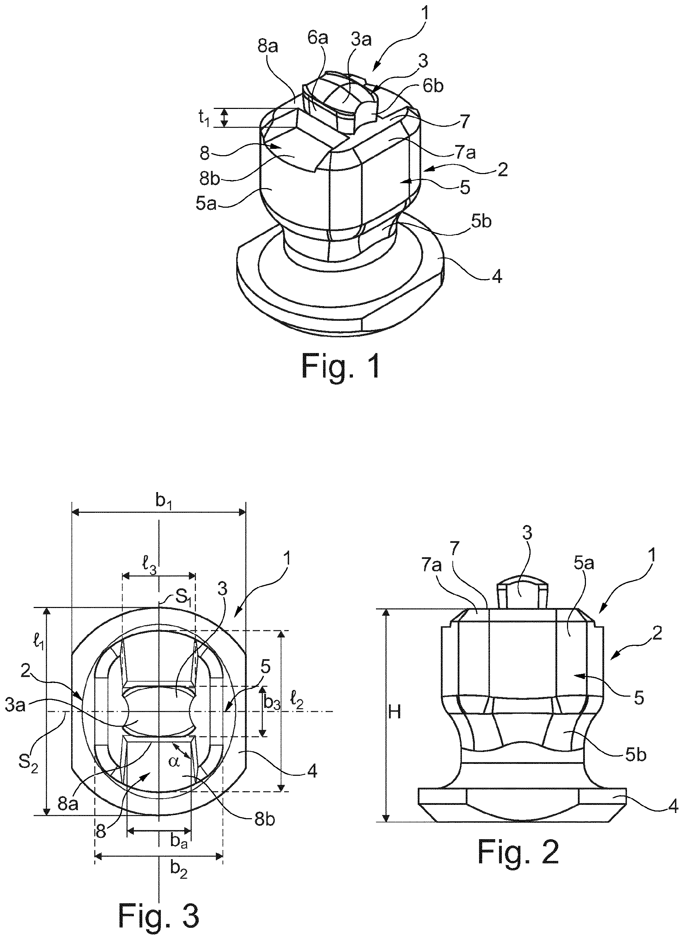

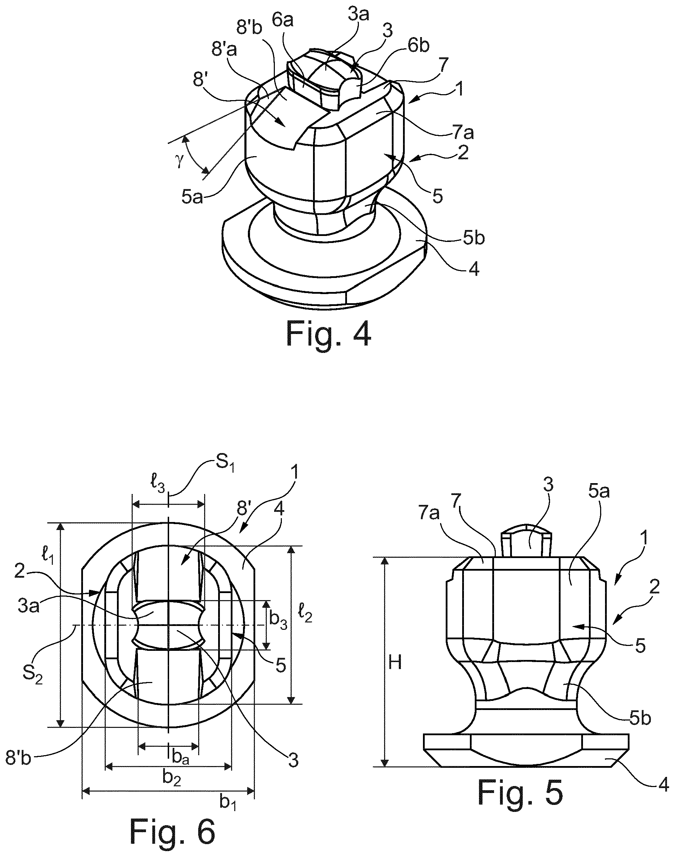

Die in den Fig. 1 bis 3 und in den Fig. 4 bis 6 gezeigten Spikes 1 weisen jeweils einen Spikekörper 2 und einen in diesem verankerten Spikepin 3 auf. Der Spikekörper 2 besteht jeweils aus einem Fußflansch 4 und einem Oberflansch 5, wobei sowohl der Fußflansch 4 als auch der Oberflansch 5 in Draufsicht und in übereinstimmenden Richtungen langgestreckt ausgeführt und im Wesentlichen bzw. näherungsweise oval gestaltet sind. Der Spikekörper 2 weist zwei Symmetrieebenen S₁ und S₂ auf (Fig. 3, Fig. 6), welche senkrecht zueinander verlaufen, wobei die Symmetrieebene S₁ in der längeren Erstreckung verläuft. Bei den in den Fig. 1 bis 3 und Fig. 4 bis 6 gezeigten Ausführungen sind die Symmetrieebenen S₁ und S₂ jeweils auch Symmetrieebenen des Spikepins 3. Der Oberflansch 5 besteht bei beiden Ausführungen aus einem Oberteil 5a, welcher über mindestens 30 % der Spikekörperhöhe H verläuft, und aus einem Unterteil 5b, welcher über eine Taillierung bzw. Verengung vom Oberteil 5a abgesetzt ist und auf dem Fußflansch 4 sitzt. Bei alternativen, nicht gezeigten Ausführungen ist der Oberflansch 5 über seine gesamte Erstreckung gemäß dem Oberteil 5a ausgeführt.

Wie die Fig. 3 und Fig. 6 zeigen, weisen die jeweiligen Fußflansche 4 der Spikes 1, bedingt durch ihre längliche und annähernd ovale Gestalt, jeweils eine Länge l₁ und eine Breite b₁ auf, wobei l₁ > b₁ ist. Die Oberflansche 5 der Spikes 1 weisen eine Länge l₂ und eine Breite b₂ auf, wobei ebenfalls l₂ > b₂ ist. Nachdem ferner l₁ > l₂ und b₁ > b₂ überragt der Fußflansch 4 in bekannter Weise den Oberflansch 5.

Der insbesondere aus Hartmetall bestehende Spikepin 3 ist jeweils mittig im Spikekörper 2 positioniert, wobei er den Spikekörper 2 mit einem Abschnitt 3a überragt. Der Spikepin 3 ist, wie es die Draufsichten auf den Abschnitt 3a in Fig. 3 und in Fig. 6 zeigen, langgestreckt, mit einer Länge l₃ - größte Erstreckung parallel zur Symmetrieebene S₂ - und einer Breite b₃ - größte Erstreckung parallel zur Symmetriebene S₁ - wobei l₃ 2,4 mm bis 3,8 mm und b₃ 1,5 mm bis 2,5 mm beträgt. Bei den in den Fig. 1 bis 3 und 4 bis 6 gezeigten Ausführungen ist der Spikepin 3 in Draufsicht annähernd viereckig und im Abschnitt 3a und auch innerhalb des Spikekörpers 2 von zwei einander gegenüberliegenden schmalen Seitenflächen 6b und zwei einander gegenüberliegenden breiten Seitenflächen 6a (Fig. 1, Fig. 4) begrenzt. Die beiden Seitenflächen 6b sind leicht nach innen gebogen, die beiden Seitenflächen 6a sind weitgehend ebene Flächen mit Übergangsrundungen zu den Seitenflächen 6b.

Jeder Oberflansch 5 weist eine durch zwei Ausnehmungen 8 (Fig. 1 bis 3), 8' (Fig. 4 bis 6) unterbrochene und ansonsten ebene, parallel zum Fußflansch 4 bzw. dessen Oberseite verlaufende Oberseite 7 auf, die außenseitig von schmalen, Richtung Fußflansch 4 schräg abfallend verlaufenden Randabschnitten 7a begrenzt sind.

Bei der in Fig. 1 bis 3 gezeigten Ausführung schließen die Ausnehmungen 8 unmittelbar und daher um 180° zueinander versetzt an die längere Seitenflächen 6a des Spikepins 3 an, sind symmetrisch zur Symmetrieebene S₁ ausgeführt, erstrecken sich bis zum Rand des Oberflansches 5 und enden hier offen. Jede Ausnehmung 8 ist in Draufsicht U-förmig und daher in U-Form von drei ebenen Begrenzungswänden 8a umlaufen, wobei die beim Spikepin 3 verlaufende Begrenzungswand 8a parallel zur Symmetrieebene S₂ verläuft und wobei die beiden an diese Begrenzungswand 8a anschließenden Begrenzungswände 8a unter einem Winkel α (Fig. 3) von mindestens 90° und insbesondere bis zu 110° zur spikepinseitigen Begrenzungswand 8a verlaufen. Die Ausnehmungen 8 werden daher beginnend bei der Begrenzungswand 8a beim Spikepin 3 in Richtung ihres offenen Endes am Rand des Oberflansches 5 geringfügig breiter. Die kleinste Breite bₐ beim Spikepin 3 entspricht zumindest der Länge l₃ des Spikepins 3 und ist insbesondere um bis zu 25 % größer als die Länge l₃. Die Tiefe t₁ der Ausnehmungen 8 beträgt 0,5 mm bis 2,0 mm und ist konstant, sodass der Boden 8b der Ausnehmungen 8 jeweils eine ebene Fläche ist, die parallel zur Oberseite 7 verläuft. Die Begrenzungswände 8a sind ferner zum Boden 8b der Ausnehmungen 8 unter einem nicht eingezeichneten Winkel von 5 °bis zu 30° geneigt, so dass sich die Ausnehmungen 8 nach oben etwas erweitern.

Bei der in den Fig. 4 bis 6 gezeigten Ausführung schließen die an der Oberseite 7 des Oberflansches 5 ausgebildeten Ausnehmungen 8' ebenfalls unmittelbar an die breiteren Seitenflächen 6a des Spikepins 3 an, weisen jedoch einen gegenüber der Oberseite 7 geneigten Boden 8'b auf, derart, dass die Ausnehmungen 8' unmittelbar beim Spikepin 3 noch keine Tiefe besitzen. Der Neigungswinkel γ (Fig. 4) der Böden 8'b der Ausnehmungen 8' relativ zur Oberseite 7 beträgt 10° bis 40°. Bei der gezeigten Ausführung weisen die Ausnehmungen 8' am Boden 8'b eine konstante Breite bₐ auf, die bei der gezeigten Ausführung entweder l₃ entspricht oder um bis zu 25 % kleiner ist als die Länge l₃ des Spikepins 3. Alternativ können auch die Ausnehmungen 8' eine Breite bₐ aufweisen, die größer ist als die Länge l₃ des Spikepins 3, die Breite bₐ kann ferner zu den offenen Enden der Ausnehmungen 8' an den Rändern des Oberflansches 5 analog zur ersten Ausführungsform größer werden. Darüber hinaus können die Ausnehmungen 8' spikepinseitig auch eine Begrenzungswand aufweisen. Die Höhe der seitlichen Begrenzungswände 8'a der Ausnehmungen 8' wird in Richtung offenen Enden der Ausnehmungen 8' kontinuierlich größer, mit Ausnahme der Erstreckung der Begrenzungswände 8'a entlang der schräg abfallenden Randabschnitte 7a.

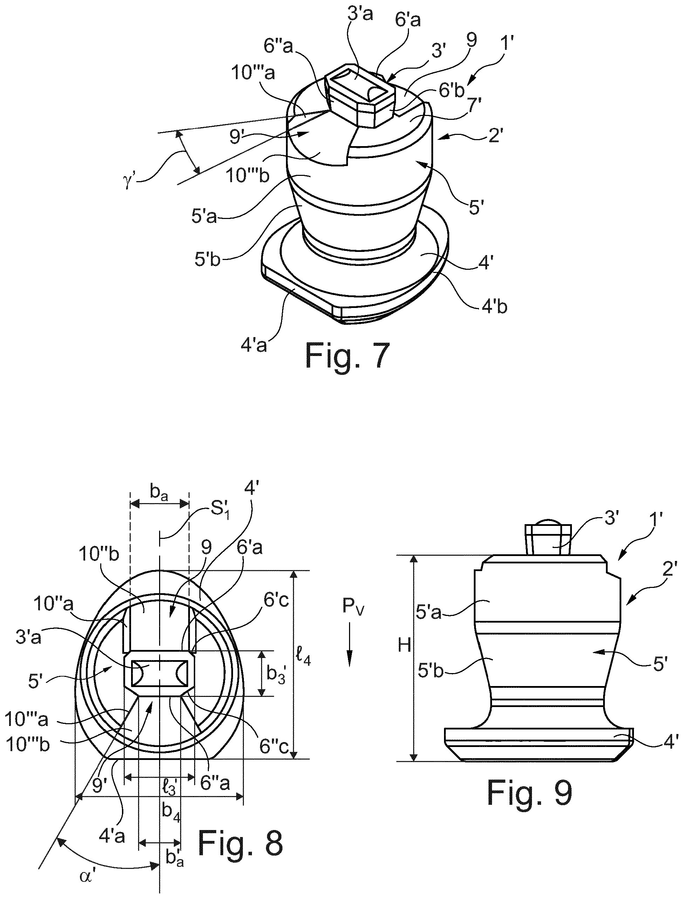

Fig. 7 bis 9 zeigen eine Ausführungsvariante eines Spikes 1' mit einem Spikekörper 2' und einem in diesem verankerten Spikepin 3', wobei der Spikekörper 2' aus einem ovalähnlichen Fußflansch 4' und einem Oberflansch 5' besteht. Der Fußflansch 4' weist eine einzige Symmetrieebene S₁' auf, welche den Fußflansch 4' entlang seiner längeren Erstreckung in zwei gleich große Hälften teilt. Der Fußflansch 4' weist entlang der Symmetriebene S₁' seine größte Länge l₄ auf und ist an dem einen, seiner längeren Erstreckung zugeordneten Endbereich gerundet, an seinem anderen, der längeren Erstreckung zugeordneten Endbereich mit einer in Draufsicht geradlinig verlaufenden, daher ebenen Randfläche 4'a versehen, welche im rechten Winkel zur Symmetrieebene S₁' verläuft. Zwei nach außen gerundete Seitenflächen 4`b verbinden den gerundeten Endbereich mit der eben ausgeführten Randfläche 4`a und weisen nahe der ebenen Randfläche 4'a den größten gegenseitigen Abstand auf, welcher der Breite b₄ des Fußflansches 4' entspricht. Der Oberflansch 5' ist im mittleren Bereich des Fußflansches 4' positioniert und bei der gezeigten Ausführung zylindrisch gestaltet und weist einen Oberteil 5'a mit konstantem Durchmesser und einen Unterteil 5'b auf, dessen Durchmesser ausgehend vom Durchmesser des Oberteils 5'a Richtung Fußflansch etwas geringer wird. Der Oberflansch 5' wird in Draufsicht auf den Spike 1' allseitig vom Fußflansch 4`, zum Teil nur geringfügig, überragt.

Der im mittleren Bereich des Spikekörpers 2' positionierte Spikepin 3' weist bei der in den Figuren 7 bis 9 dargestellten Ausführung einen Endabschnitt 3'a auf, welcher in Draufsicht annähernd die Gestalt eines länglichen Viereckes mit abgeschrägten Ecken und einer Länge l₃' sowie einer Breite b₃' besitzt, wobei der Spikepin 3' derart im Spikekörper 2' verankert ist, dass er sich im rechten Winkel zur Symmetrieebene S₁' erstreckt. Der Spikepin 3' besitzt daher zumindest an seinem den Spikekörper 2' überragenden Endabschnitt 3'a symmetrisch zur Symmetrieebene S₁' zwei schmale Seitenflächen 6'b, ferner zwei breite im rechten Winkel zur Symmetrieebene S₁' orientierte Seitenflächen 6'a, 6"a sowie Eckflächen 6'c, 6"c. Die Seitenfläche 6"a ist schmäler als die Seitenfläche 6'a und ist jene Seitenfläche, welche der ebenen Randfläche 4'a des Fußflansches 4' zugewandt ist. An diese Seitenfläche 6"a schließen zwei Eckflächen 6"c an, welche breiter sind als die zwei Eckflächen 6'c, die unmittelbar an die längere Seitenfläche 6'a anschließen. Bei einer alternativen Ausführung ist der Spikepin 3' analog zum Spikepin 3 der beiden ersten Ausführungsvarianten ausgeführt, er kann anstelle von Eckflächen Übergangsrundungen zwischen den Seitenflächen 6'b und 6'a bzw. 6"a oder gleich gestaltete Seitenflächen 6'a und 6"a aufweisen.

Die ebene Oberseite 7' des Oberflansches 5' ist von zwei unterschiedlich gestalteten Ausnehmungen 9, 9' unterbrochen, die symmetrisch zur Symmetrieebene S₁' ausgeführt sind. Die Ausnehmung 9 erstreckt sich beginnend bei der Seitenfläche 6'a des Spikepins 3' zum Rand des Oberflansches 5' und ist hier offen, die Ausnehmung 9' erstreckt sich von der Seitenfläche 6"a ausgehend zum gegenüberliegenden Rand des Oberflansches 5' und ist hier ebenfalls offen. Die Ausnehmung 9 weist bei der gezeigten Ausführung eine konstante Breite bₐ auf, die beim gezeigten Beispiel der Breite der Seitenfläche 6'a entspricht und insbesondere um 25 % von der Länge l₃' abweichen kann. Die Ausnehmung 9 ist in Draufsicht U-förmig von Begrenzungswänden 10"a begrenzt, die beiden seitlichen Begrenzungswände 10" a verlaufen unter einem spitzen nicht eingezeichneten Winkel von 5° bis 30° zur Oberseite 7' des Oberflansches 5' geneigt, derart, dass die Ausnehmung 9 an der Oberseite 7' des Oberflansches 5' breiter ist als im Bereich ihres Bodens 10"b. Bei der gezeigten Ausführung weist ferner die Ausnehmung 9 eine in den Figuren 7 bis 9 nicht eingezeichnete Tiefe von 0,5 mm bis 2,0 mm auf, die konstant ist, sodass sich der Boden 10"b parallel zur Oberseite 7' des Oberflansches 5' erstreckt. Die der Ausnehmung 9 gegenüber befindliche Ausnehmung 9' weist an ihrem beim Spikepin 3' befindlichen Ende an der Seitenfläche 6"a eine Breite b'ₐ auf, welche der Breite der Seitenfläche 6"a entspricht und mindestens 1,4 mm beträgt, wobei von dieser Seitenfläche 6"a ausgehend der Boden 10‴b der Ausnehmung 9' zum offenen Rand der Ausnehmung 9' geneigt verläuft und abfällt. Der Neigungswinkel γ' des Bodens 10‴b gegenüber der Oberseite 7' des Oberflansches 5' beträgt 10° bis 40°. Des Weiteren ist die Ausnehmung 9' seitlich von Begrenzungswänden 10‴a begrenzt, welche trichterförmig auseinanderlaufen, sodass die Breite der Ausnehmung 9' in Richtung zum offenen Rand der Ausnehmung 9' am Rand des Oberflansches 5' kontinuierlich zunimmt. Der in Draufsicht vorliegende Winkel α' zwischen den Begrenzungswänden 10‴a und der Symmetrieebene S₁' beträgt in der Größenordnung von 10° bis 40°.

Bei gesondert nicht dargestellten Alternativen der in Fig. 7 bis Fig. 9 gezeigten Ausführung weist die Ausnehmung 9 beispielsweise ebenfalls einen geneigten Boden und trichterförmig nach außen zum Rand des Oberflansches verlaufende Begrenzungswände auf. Die Ausnehmung 9' kann beispielsweise einen parallel zur Oberseite 7' des Oberflansches 5' verlaufenden Boden aufweisen.

Die Ausnehmungen 8, 8`, 9 und 9' wirken als flache und vergleichsweise breite Ableitkanäle oder Reservoire für den Abtransport bzw. die Aufnahme von Eisspänen, die auf eisigen Fahrbahnen bzw. Oberflächen dann entstehen, wenn Spikes beim Abrollen durch das Eis gezogen werden und dabei Rinnen in die Eisoberfläche fräsen. Dadurch wird ein Ansammeln der anfallenden Eisspäne um den jeweiligen Spike vermieden.

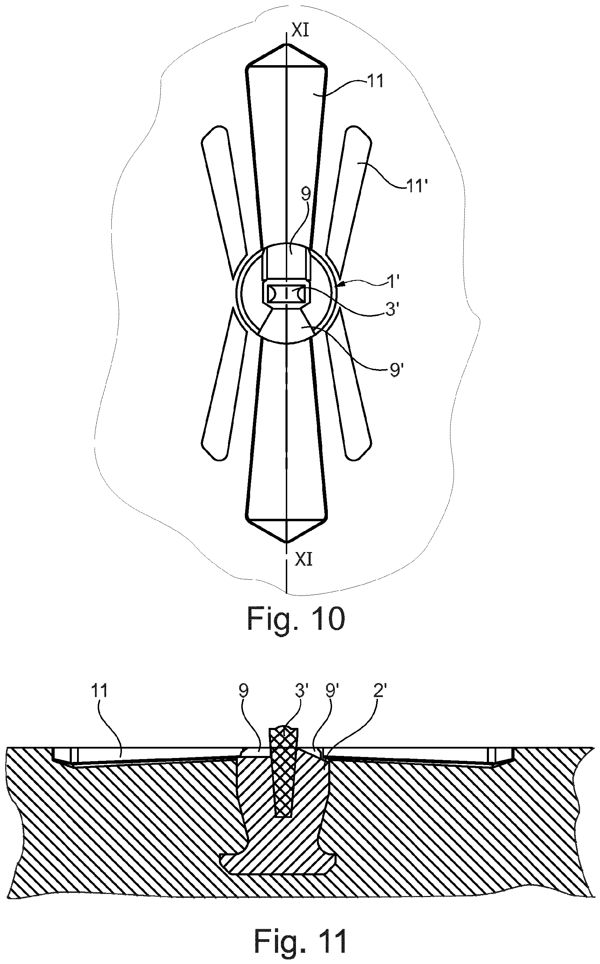

Besonders vorteilhaft ist es, die Spikes 1 und 1' derart im Laufstreifen anzuordnen, dass sie in Verlängerung von sogenannten Eisreservoiren, die in der Oberfläche des Laufstreifens unmittelbar beim Spikeloch ausgebildet sind, verlaufen. Ausführungen solcher Eisreservoire sind in unterschiedlichen Varianten bekannt. Üblicherweise sind diese Eisreservoire relativ seichte und langgestreckte oberflächliche Vertiefungen im Laufstreifen, die eine Erstreckungslänge von wenigen Millimetern, beispielsweise 4 mm bis 10 mm, und eine Breite, die kleiner ist als ihre Längserstreckung, aufweisen. Fig. 10 zeigt beispielhaft in Draufsicht einen Ausschnitt eines Laufstreifens eines Fahrzeugluftreifens mit einem in einem Spikeloch verankerten Spike 1' und je einer unmittelbar an die Ausnehmungen 9, 9` anschließenden, im Laufstreifen ausgebildeten Vertiefung 11. Seitlich der Vertiefungen 11 sind weitere Vertiefungen 11' im Laufstreifen vorgesehen, die neben den Vertiefungen 11 verlaufen. Die Ausgestaltung und Anordnung der Vertiefungen 11, 11' ist an sich bekannt, sodass auf diese nicht näher eingegangen wird. Für ein optimales Zusammenwirken der Ausnehmungen 9, 9' und der Vertiefungen 11 ist es von Vorteil, wenn die Breite und die Tiefe der Vertiefungen 11 an ihren spikelochseitigen Enden an die Breiten und Tiefen (Fig. 12) der Ausnehmungen 9, 9' an ihren spikekörperaußenseitigen Enden angepasst sind und diese Breiten und Tiefen jeweils weitgehend übereinstimmen.

Besonders vorteilhaft ist ferner eine Anordnung von Spikes 1, 1' im Laufstreifens eines Reifens, bei welcher die Ausnehmungen 8, 8', 9, 9' in Umfangsrichtung orientiert sind. Besonders vorteilhaft ist weiters eine Anordnung der Spikes 1' im mittleren Bereich von mit drehrichtungsgebunden gestalteten Profilen versehenen Laufstreifen, wobei die Spikes 1' derart im Laufstreifen verankert sind, dass die breitere, flache Seite der Fußflansche 4' beim Abrollen des Reifens bei Vorwärtsfahrt in die Abrollrichtung zeigt. In Fig. 8 ist diese Abrollrichtung mit dem Pfeil Pᵥ angedeutet.

### Bezugsziffernliste

- 1, 1': Spike
- 2, 2': Spikekörper
- 3, 3': Spikepin
- 3a, 3'a.: Abschnitt
- 4, 4': Fußflansch
- 4'a: Randfläche
- 4'b: Seitenfläche
- 5, 5': Oberflansch
- 5a, 5'a: Oberteil
- 5b, 5'b: Unterteil
- 6a, 6'a, 6"a: Seitenfläche
- 6b, 6'b: Seitenfläche
- 6'c, 6"c: Eckflächen
- 7, 7': Oberseite
- 7a: Randabschnitt
- 8, 8': Ausnehmung
- 8a, 8'a: Begrenzungswand
- 8b, 8`b: Boden
- 9, 9': Ausnehmung
- 10"a, 10‴a: Begrenzungswand
- 10"b, 10‴b: Boden
- 11, 11': Vertiefung
- α, α', γ, γ': Winkel
- H: Spikekörperhöhe
- l₁, l₂, l₃, l₃', l₄: Länge
- b₁, b₂, b₃, b₃', b₄: Breite
- bₐ, b'ₐ: Breite
- Pᵥ: Abrollrichtung
- S₁, S_{1'}, S₂: Symmetrieebene
- t₁: Tiefe

## Patentansprüche

1. Spike (1, 1') zum Verankern im Laufstreifen eines Fahrzeugreifens mit einem Spikekörper (2, 2') aus einem Oberflansch (5, 5') und einem Fußflansch (4, 4') und mit einem im Spikekörper (2, 2') verankerten, den Oberflansch (5, 5') mit einem Pinabschnitt (3a, 3'a) überragenden Spikepin (3, 3'), wobei an der ansonsten ebenen Oberseite (7, 7') des Oberflansches (5, 5') zwei Ausnehmungen (8, 8', 9, 9`) ausgebildet sind, welche jeweils bezüglich des Spikepins (3, 3') einander gegenüberliegen, vom Spikepin (3, 3') ausgehend bis zum Rand des Oberflansches (5, 5') verlaufen und am Rand des Oberflansches (5, 5') offen enden,
**dadurch gekennzeichnet,**
**dass** der den Oberflansch (5, 5') überragende Pinabschnitt (3a, 3'a) des Spikepins (3, 3') in Draufsicht langgestreckt ausgeführt ist und dass die beiden Ausnehmungen (8, 8', 9, 9') unmittelbar an die in Draufsicht breiteren Seiten des Spikepins (2, 2') anschließen.

2. Spike (1, 1') nach Anspruch 1, **dadurch gekennzeichnet, dass** der Fußflansch (4, 4') des Spikekörpers (2, 2') langgestreckt, insbesondere oval oder ovalähnlich, gestaltet ist und zumindest eine, in der längeren Erstreckung des Fußflansches (4, 4') verlaufende Symmetrieebene (S₁, S₁') aufweist, wobei der den Oberflansch (5, 5') überragende Pinabschnitt (3a, 3'a) des Spikepins (3, 3') mit seiner längeren Erstreckung im rechten Winkel zu der in der längeren Erstreckung des Fußflansches vorliegenden Symmetrieebene (S₁, S₁') verläuft.

3. Spike (1, 1') nach Anspruch 1 oder 2, **dadurch gekennzeichnet, dass** zumindest eine der Ausnehmungen (8, 9') spikepinseitig ihre kleinste Breite (bₐ, b'ₐ) aufweist, welche geringer ist als die Länge (13) des den Oberflansch (5, 5') überragenden Pinabschnittes (3a, 3'a) des Spikepins (3, 3') entlang seiner längeren Erstreckung.

4. Spike (1, 1') nach einem der Ansprüche 1 bis 3, **dadurch gekennzeichnet, dass** zumindest eine der Ausnehmungen (8, 8', 9, 9') spikepinseitig eine Breite (bₐ, b'ₐ) aufweist, die um bis zu 25% von der Länge (13) des den Oberflansch (5, 5') überragenden Pinabschnittes (3a, 3'a) des Spikepins (3, 3') entlang seiner längeren Erstreckung abweicht.

5. Spike (1, 1`) nach einem der Ansprüche 1 bis 4, **dadurch gekennzeichnet, dass** zumindest eine der Ausnehmungen (8, 8', 9, 9') eine konstante Breite (bₐ) oder eine in Richtung ihres offenen Endes größer werdende Breite (b'ₐ) aufweist, welche spikepinseitig mindestens 1,4 mm beträgt.

6. Spike (1, 1') nach einem der Ansprüche 1 bis 5, **dadurch gekennzeichnet, dass** zumindest eine der Ausnehmungen (8, 9) einen parallel zur Oberseite (7, 7') des Oberflansches (5, 5') verlaufenden Boden (8b, 10"b) aufweist.

7. Spike (1, 1') nach einem der Ansprüche 1 bis 6, **dadurch gekennzeichnet, dass** zumindest eine der Ausnehmungen (8', 9') einen Boden (8'b, 10‴b) aufweist, welcher gegenüber der Oberseite (7, 7') des Oberflansches (5, 5') in Richtung zum offenen Ende der Ausnehmung (8', 9') abfällt.

8. Spike (1') nach Anspruch 7, **dadurch gekennzeichnet, dass** zumindest eine der Ausnehmungen (9') an ihrem spikepinseitigen Ende keine Tiefe aufweist.

9. Spike (1, 1') nach einem der Ansprüche 1 bis 8, **dadurch gekennzeichnet, dass** die Ausnehmungen (8, 8', 9, 9') eine Tiefe (t₁) bzw. eine größte Tiefe von 0,5 mm bis 2,0 mm aufweisen.

10. Spike (1, 1') nach einem der Ansprüche 1 bis 9, **dadurch gekennzeichnet, dass** die eine Ausnehmung (8, 9) eine konstante Tiefe und die andere Ausnehmung (8', 9') eine in Richtung zum offenen Ende der Ausnehmung (8', 9') größer werdende Tiefe aufweist.

11. Spike (1') nach einem der Ansprüche 1 bis 10, **dadurch gekennzeichnet, dass** die eine Ausnehmung (9) eine konstante Breite und die andere Ausnehmung (9') eine in Richtung ihres offenen Endes größer werdende Breite (b'ₐ) aufweist

12. Fahrzeugluftreifen mit einem Laufstreifen mit im Laufstreifen in Spikelöchern verankerten Spikes (1, 1`) mit einem Spikekörper (2, 2') aus einem Oberflansch (5, 5') und einem Fußflansch (4, 4') sowie mit einem im Spikekörper (2, 2') verankerten den Oberflansch (5, 5') überragenden Spikepin (3, 3'), wobei der Oberflansch (5, 5') mit zwei Ausnehmungen (8, 8', 9, 9') versehen ist, welche jeweils bezüglich des Spikepins (3, 3') einander gegenüberliegen, vom Spikepin (3, 3') ausgehend bis zum Rand des Oberflansches (5, 5') verlaufen und am Rand des Oberflansches (5, 5') offen enden,
**dadurchgekennzeichnet,**
dass im Laufstreifen in Verlängerung der Ausnehmungen (8, 8', 9, 9') jeweils eine langgestreckte Vertiefung (11) ausgebildet ist.

13. Fahrzeugluftreifen nach Anspruch 12, **dadurch gekennzeichnet, dass** die Breite der Vertiefungen (11) an ihren spikelochseitigen Enden zumindest weitgehend an die Breite der Ausnehmungen (8, 8', 9, 9') an deren offenen Enden am Rand des Oberflansches (5, 5') der Spikes (1, 1') angepasst ist bzw. dieser Breite entspricht.

14. Fahrzeugluftreifen nach Anspruch 12 oder 13, **dadurch gekennzeichnet, dass** die Tiefe der Vertiefungen (11) an ihren spikelochseitigen Enden zumindest weitgehend an das Niveau des Bodens (8b, 8'b, 10"b, 10‴b) der jeweiligen Ausnehmung (8, 8', 9, 9') an deren offenen Ende am Rand des Oberflansches (5, 5') der Spikes (1, 1') angepasst ist bzw. der Tiefe der jeweiligen Ausnehmung (8, 8', 9, 9') an dieser Stelle entspricht.

## Claims

1. Stud (1, 1') for anchoring in the tread of a pneumatic vehicle tyre, having a stud body (2, 2') composed of an upper flange (5, 5') and a foot flange (4, 4') and having a stud pin (3, 3') which is anchored in the stud body (2, 2') and by way of a pin portion (3a, 3'a) protrudes beyond the upper flange (5, 5'), wherein on the otherwise planar upper side (7, 7') of the upper flange (5, 5') there are formed two clearances (8, 8', 9, 9') which are in each case mutually opposite with respect to the stud pin (3, 3'), proceeding from the stud pin (3, 3') run to the periphery of the upper flange (5, 5'), and terminate so as to be open at the periphery of the upper flange (5, 5'),
**characterized in that**
the pin portion (3a, 3'a) of the stud pin (3, 3') that protrudes beyond the upper flange (5, 5') is embodied so as to be elongate in the plan view, and **in that** the two clearances (8, 8', 9, 9') are directly contiguous to the sides of the stud pin (2, 2') that are wider in the plan view.

2. Stud (1, 1') according to Claim 1, **characterized in that** the foot flange (4, 4') of the stud body (2, 2') is designed so as to be elongate, in particular oval or ovoid, and has at least one plane of symmetry (S₁, S₁') which runs in the longer extent of the foot flange (4, 4'), wherein the pin portion (3a, 3'a) of the stud pin (3, 3') that protrudes beyond the upper flange (5, 5') by way of the longer extent of said pin portion (3a, 3'a) runs orthogonally to the plane of symmetry (S₁, S₁') which is present in the longer extent of the foot flange.

3. Stud (1, 1') according to Claim 1 or 2, **characterized in that** at least one of the clearances (8, 9') has the smallest width (bₐ, b'ₐ) thereof on the side toward the stud pin, said smallest width (bₐ, b'ₐ) being smaller than the length (l₃) of the pin portion (3a, 3'a) of the stud pin (3, 3') that protrudes beyond the upper flange (5, 5'), said length (l₃) being along the longer extent of said pin portion (3a, 3'a).

4. Stud (1, 1') according to one of Claims 1 to 3, **characterized in that** at least one of the clearances (8, 8', 9, 9') on the side toward the stud pin has a width (bₐ, b'ₐ) which deviates by up to 25% from the length (l₃) of the pin portion (3a, 3'a) of the stud pin (3, 3') that protrudes beyond the upper flange (5, 5'), said length (l₃) being along the longer extent of said pin portion (3a, 3'a).

5. Stud (1, 1') according to one of Claims 1 to 4, **characterized in that** at least one of the clearances (8, 8', 9, 9') has a consistent width (bₐ) or a width (b'ₐ) which increases in the direction of the open end of said clearance (8, 8', 9, 9'), said width (b'ₐ) on the side toward the stud pin being at least 1.4 mm.

6. Stud (1, 1') according to one of Claims 1 to 5, **characterized in that** at least one of the clearances (8, 9) has a base (8b, 10"b) which runs parallel to the upper side (7, 7') of the upper flange (5, 5').

7. Stud (1, 1') according to one of Claims 1 to 6, **characterized in that** at least one of the clearances (8', 9') has a base (8'b, 10"'b) which in relation to the upper side (7, 7') of the upper flange (5, 5') slopes in the direction toward the open end of the clearance (8', 9').

8. Stud (1') according to Claim 7, **characterized in that** at least one of the clearances (9') at the end thereof toward the stud pin has no depth.

9. Stud (1, 1') according to one of Claims 1 to 8, **characterized in that** the clearances (8, 8', 9, 9') have a depth (t₁), or a maximum depth, respectively, of 0.5 mm to 2.0 mm.

10. Stud (1, 1') according to one of Claims 1 to 9, **characterized in that** the one clearance (8, 9) has a consistent depth, and the other clearance (8', 9') has a depth which increases in the direction toward the open end of the clearance (8', 9').

11. Stud (1') according to one of Claims 1 to 10, **characterized in that** the one clearance (9) has a consistent width, and the other clearance (9') has a width (b'ₐ) which increases in the direction toward the open end of said clearance (9').

12. Pneumatic vehicle tyre having a tread having studs (1, 1') which are anchored in stud holes in the tread, said studs (1, 1') having a stud body (2, 2') composed of an upper flange (5, 5') and a foot flange (4, 4'), as well as having a stud pin (3, 3') which is anchored in the stud body (2, 2') and protrudes beyond the upper flange (5, 5'), wherein the upper flange (5, 5') is provided with two clearances (8, 8', 9, 9') which are in each case mutually opposite with respect to the stud pin (3, 3'), proceeding from the stud pin (3, 3') run to the periphery of the upper flange (5, 5'), and terminate so as to be open at the periphery of the upper flange (5, 5'),
**characterized in that**
one elongate depression (11) is in each case configured in the extension of the clearances (8, 8', 9, 9') in the tread.

13. Pneumatic vehicle tyre according to Claim 12, **characterized in that** the width of the depressions (11) at the ends thereof toward the stud hole is at least largely adapted to the width of the clearances (8, 8', 9, 9') at the open ends thereof on the periphery of the upper flange (5, 5') of the studs (1, 1'), or corresponds to said width, respectively.

14. Pneumatic vehicle tyre according to Claim 12 or 13, **characterized in that** the depth of the depressions (11) at the ends thereof toward the stud hole is at least largely adapted to the level of the base (8b, 8'b, 10"b, 10‴b) of the respective clearance (8, 8', 9, 9') at the open end thereof on the periphery of the upper flange (5, 5') of the studs (1, 1'), or corresponds to the depth of the respective clearance (8, 8', 9, 9') at this location, respectively.

## Revendications

1. Crampon (1, 1') destiné à être ancré dans la bande de roulement d'un pneumatique de véhicule, comprenant un corps de crampon (2, 2') constitué d'une collerette supérieure (5, 5') et d'une collerette de base (4, 4') et comprenant une pointe de crampon (3, 3') ancrée dans le corps de crampon (2, 2') et dépassant au-delà de la collerette supérieure (5, 5') par une portion de pointe (3a, 3'a), deux évidements (8, 8', 9, 9') étant formés sur le côté supérieur (7, 7'), autrement plan, de la collerette supérieure (5, 5'), lesquels évidements sont respectivement opposés les uns aux autres par rapport à la pointe de crampon (3, 3'), s'étendent à partir de la pointe de crampon (3, 3') jusqu'au bord de la collerette supérieure (5, 5') et se terminent de manière ouverte sur le bord de la collerette supérieure (5, 5'),
**caractérisé en ce que**
la portion de pointe (3a, 3'a), dépassant au-delà de la collerette supérieure (5, 5'), de la pointe de crampon (3, 3') est réalisée de manière allongée en vue de dessus et **en ce que** les deux évidements (8, 8', 9, 9') se raccordent directement aux côtés plus larges en vue de dessus de la pointe de crampon (2, 2').

2. Crampon (1, 1') selon la revendication 1, **caractérisé en ce que** la collerette de base (4, 4') du corps de crampon (2, 2') est configurée de manière allongée, en particulier ovale ou ovoïdale, et présente au moins un plan de symétrie (S₁, S₁') s'étendant dans l'étendue plus longue de la collerette de base (4, 4'), la portion de pointe (3a, 3'a), dépassant au-delà de la collerette supérieure (5, 5'), de la pointe de crampon (3, 3') s'étendant avec son étendue plus longue à angle droit par rapport au plan de symétrie (S₁, S₁') présent dans l'étendue plus longue de la collerette de base.

3. Crampon (1, 1') selon la revendication 1 ou 2, **caractérisé en ce qu'**au moins l'un des évidements (8, 9') présente sa plus petite largeur (bₐ, b'ₐ) du côté de la pointe de crampon, laquelle largeur est inférieure à la longueur (l₃) de la portion de pointe (3a, 3'a), dépassant au-delà de la collerette supérieure (5, 5'), de la pointe de crampon (3, 3') le long de son étendue plus longue.

4. Crampon (1, 1') selon l'une des revendications 1 à 3, **caractérisé en ce qu'**au moins l'un des évidements (8, 8', 9, 9') présente, du côté de la pointe de crampon, une largeur (bₐ, b'ₐ) qui diffère d'au plus 25% de la longueur (l₃) de la portion de pointe (3a, 3'a), dépassant au-delà de la collerette supérieure (5, 5'), de la pointe de crampon (3, 3') le long de son étendue plus longue.

5. Crampon (1, 1') selon l'une des revendications 1 à 4, **caractérisé en ce qu'**au moins l'un des évidements (8, 8', 9, 9') présente une largeur constante (bₐ) ou une largeur (b'ₐ) augmentant en direction de son extrémité ouverte, laquelle largeur vaut au moins 1,4 mm du côté de la pointe de crampon.

6. Crampon (1, 1') selon l'une des revendications 1 à 5, **caractérisé en ce qu'**au moins l'un des évidements (8, 9) présente un fond (8b, 10"b) s'étendant parallèlement au côté supérieur (7, 7') de la collerette supérieure (5, 5').

7. Crampon (1, 1') selon l'une des revendications 1 à 6, **caractérisé en ce qu'**au moins l'un des évidements (8', 9') présente un fond (8'b, 10"'b), lequel descend par rapport au côté supérieur (7, 7') de la collerette supérieure (5, 5') en direction de l'extrémité ouverte de l'évidement (8', 9').

8. Crampon (1') selon la revendication 7, **caractérisé en ce qu'**au moins l'un des évidements (9') ne présente aucune épaisseur à son extrémité côté pointe de crampon.

9. Crampon (1, 1') selon l'une des revendications 1 à 8, **caractérisé en ce que** les évidements (8, 8', 9, 9') présentent une profondeur (t₁) ou une profondeur maximale de 0,5 mm à 2,0 mm.

10. Crampon (1, 1') selon l'une des revendications 1 à 9, **caractérisé en ce que** l'un des évidements (8, 9) présente une profondeur constante et l'autre évidement (8', 9') présente une profondeur augmentant en direction de l'extrémité ouverte de l'évidement (8', 9').

11. Crampon (1') selon l'une des revendications 1 à 10, **caractérisé en ce que** l'un des évidements (9) présente une largeur constante et l'autre évidement (9') présente une largeur (b'ₐ) augmentant en direction de son extrémité ouverte.

12. Pneumatique de véhicule comprenant une bande de roulement dotée de crampons (1, 1') ancrés dans des trous à crampons dans la bande de roulement, lesquels crampons sont dotés d'un corps de crampon (2, 2') constitué d'une collerette supérieure (5, 5') et d'une collerette de base (4, 4') ainsi que d'une pointe de crampon (3, 3') ancrée dans le corps de crampon (2, 2') et dépassant au-delà de la collerette supérieure (5, 5'), la collerette supérieure (5, 5') étant pourvue de deux évidements (8, 8', 9, 9'), lesquels évidements sont respectivement opposés les uns aux autres par rapport à la pointe de crampon (3, 3'), s'étendent à partir de la pointe de crampon (3, 3') jusqu'au bord de la collerette supérieure (5, 5') et se terminent de manière ouverte sur le bord de la collerette supérieure (5, 5'),
**caractérisé en ce**
**qu'**un creux allongé (11) est formé respectivement dans le prolongement des évidements (8, 8', 9, 9') dans la bande de roulement.

13. Pneumatique de véhicule selon la revendication 12, **caractérisé en ce que** la largeur des creux (11) à leurs extrémités côté trou de crampon est adaptée au moins dans une large mesure à la largeur des évidements (8, 8', 9, 9') à leurs extrémités ouvertes sur le bord de la collerette supérieure (5, 5') des crampons (1, 1') ou correspond à cette largeur.

14. Pneumatique de véhicule selon la revendication 12 ou 13, **caractérisé en ce que** la profondeur des creux (11) à leurs extrémités côté trou de crampon est adaptée au moins dans une large mesure au niveau du fond (8b, 8'b, 10"b, 10"'b) de l'évidement (8, 8', 9, 9') respectif à son extrémité ouverte sur le bord de la collerette supérieure (5, 5') des crampons (1, 1') ou correspond à la profondeur de l'évidement (8, 8', 9, 9') respectif à cet emplacement.
